# EUROPEAN PATENT APPLICATION

(11) **EP 1 942 124 A1**
(43) Date of publication of application: **09.07.2008**
(21) Application number: 06380333.2
(22) Date of filing: 22.12.2006
(51) Int. Cl.: C08G 18/42, C08G 18/79, C09D 175/06, C09D 167/00

(54) **Anti-graffity powder coating composition**

(71) Applicant: DuPont Powder Coatings Ibérica, S.L., 08191 Rubi Barcelona (ES); E.I. du Pont de Nemours and Company, Wilmington, DE 19898 (US)
(72) Inventor: Marelli, Ernesto, 42600 Savigneux (FR); Rodriguez-Santamarta, Carlos, 08002 Barcelona (ES); Rekowski, Volker, 45549 Sprockhoevel (DE)
(74) Representative: Elzaburu Marquez, Alberto

(57) **Abstract**

The present invention provides an anti-graffiti powder coating composition comprising
(A) 30 to 80 wt% of a mixture of at least one polyester resin A having a hydroxyl number in the range of 30 to 60 mg KOH/g, a weight average molar mass Mn in a range of 3100 to 5000 and a glass transition temperature Tg of 40 to 60 °C and at least one polyester resin B having a hydroxyl number in the range of 250 to 350 mg KOH/g, a weight average molar mass Mn in a range of 2000 to 3000,
(B) 10 to 40 wt% of at least one hardeners selected from the group consisting of diisocyanates, polyisocyanates and urethdiones, and
(C) 0,01 to 40 wt% of at least one coating additive, pigment and/or filler,

the wt% being based on the total weight of the powder coating composition.

The powder coating composition of this invention are coating compositions providing a very good anti-graffiti performance of the coatings for a long time period besides good coating properties, particularly, high exterior durability and chemical resistance as well as a gloss-control of the coated surface, to receive, e.g. matt to semi-matt coatings.

## Description

### Field of the Invention

The present invention is directed to a powder coating composition providing anti-graffiti properties of the coatings.

### Description of Prior Art

The public is repeatedly been confronted with the problem of undesired graffiti produced by spraying and frequently disfiguring public buildings and vehicles in particular. In most cases they cannot be eliminated simply by washing; usually the graffiti-bearing walls and substrates have to be repainted, which is laborious and expensive.

Attempts have been made to prepare protective coatings providing a low surface tension and, therefore, dirt-repellent properties. Examples are formulations comprising fluorine containing polymers, see US 4,929,666, and formulations comprising polysiloxane compounds as described in DE-A 26 10 372 and US 5,426,151. Problems arising with these systems are the application in specific technical fields, only, for example impregnating of textiles, or incompatibility of components in the coating formulation or insufficient anti-graffiti protection for a long time period.

With regard to powder coating compositions, there do not exist powder coatings which provide an anti-graffiti protection in a sufficient quality; they may be easily attacked from different kind of graffiti inks.

### Summary of the Invention

The present invention provides an anti-graffiti powder coating composition comprising
(A) 30 to 80 wt% of a mixture of at least one polyester resin A having a hydroxyl number in the range of 30 to 60 mg KOH/g, a weight average molar mass Mn in a range of 3100 to 5000 and a glass transition temperature Tg of 40 to 60 °C and at least one polyester resin B having a hydroxyl number in the range of 250 to 350 mg KOH/g, a weight average molar mass Mn in a range of 2000 to 3000,
(B) 10 to 40 wt% of at least one hardeners selected from the group consisting of diisocyanates, polyisocyanates and urethdiones, and
(C) 0,01 to 40 wt% of at least one coating additive, pigment and/or filler,
the wt% being based on the total weight of the powder coating composition.

The powder coating composition of this invention are coating compositions providing a very good anti-graffiti performance of the coatings for a long time period besides good coating properties, particularly, high exterior durability and chemical resistance as well as a gloss-control of the coated surface, to receive, e.g. matt to semi-matt coatings.

### Detailed Description of the Invention

The features and advantages of the present invention will be more readily understood, by those of ordinary skill in the art, from reading the following detailed description. It is to be appreciated those certain features of the invention, which are, for clarity, described above and below in the context of separate embodiments, may also be provided in combination in a single embodiment. Conversely, various features of the invention that are, for brevity, described in the context of a single embodiment, may also be provided separately or in any sub-combination. In addition, references in the singular may also include the plural (for example, "a" and "an" may refer to one, or one or more) unless the context specifically states otherwise.

The slight variations above and below the stated ranges of numerical values can be used to achieve substantially the same results as values within the ranges. Also, the disclosure of these ranges is intended as a continuous range including every value between the minimum and maximum values.

All patents, patent applications and publications referred to herein are incorporated by reference in their entirety.

All the number or weight average molar mass Mn data stated in the present description are determined or to be determined by gel permeation chromatography (GPC; divinylbenzene-cross-linked polystyrene as the immobile phase, tetrahydrofuran as the liquid phase, polystyrene standards).

Suitable polyester resins as component A) are polyester resins A having a hydroxyl number in the range of 30 to 60 mg KOH/g, a weight average molar mass Mn in a range of 3100 to 5000 and a glass transition temperature Tg of 40 to 60 °C and polyester resins B having a hydroxyl number in the range of 250 to 350 mg KOH/g, a weight average molar mass Mn in a range of 2000 to 3000.

The polyesters may be produced in a conventional manner by reacting of one or more aliphatic, aromatic or cycloaliphatic di- or polycarboxylic acids, and the anhydrides and/or esters thereof with polyalcohols, as is, for example, described in D.A. Bates, The Science of Powder Coatings, volumes 1 & 2, Gardiner House, London, 1990, and as known by the person skilled in the art. For example, the polyesters may be produced in conventional manner by performing an esterification reaction of the acid component with the alcohol component in a nitrogen atmosphere, for example, at temperatures of between 140 and 260°C, with or without use of conventional esterification catalysts.

Examples of suitable polycarboxylic acids, and the anhydrides and/or esters thereof include maleic acid, fumaric acid, malonic acid, adipic acid, 1.4-cyclohexane dicarboxylic acid, isophthalic acid, terephthalic acid, acrylic acid, and their anhydride form, or mixtures thereof. Examples of suitable polyalcohols are benzyl alcohol, butanediol, hexanediol, ethylene glycol, diethylene glycol, pentaerytritol, neopentyl glycol, propylene glycol, and mixtures thereof, in general.

The suitable polycarboxylic acids and the suitable polyalcohols are selected in such a way that the polyesters A and the polyesters B according to this invention are obtained having the described hydroxyl number, the weight average molar mass Mn and the glass transition temperature Tg of 40 to 60 °C.

The polyester mixture of component A) may be used together with small amounts of carboxyl-group containing polyesters, for example 0 to 10 wt% of carboxyl-group containing polyesters having a carboxyl-value of, for example, 10 to 200.

Preferred is the use of hydroxyl-functionalized polyesters without any addition of carboxyl- group containing polyesters.

Crystalline and/or semicrystalline saturated carboxylic functional polyester resins are also usable which have a Tm (melting temperature) in the range of e.g., 50 to 150°C, determined by means of DSC.

The polyesters of the invention can also be partially self cross-linkable polyesters containing cross-linkable functional groups known by a person skilled in the art.

The content of the polyester resin mixture (A) may be preferably in a range, for example, between 40 to 65 wt %, the wt% being based on the total weight of the powder coating composition.

The mixing ratio of polyester A to polyester B is in the range of 70:30 to 80:20.

Component B) of this invention is used as hardener of Component A). Hardeners may be used as component B) selected from the group consisting of diisocyanates, polyisocyanates and urethdiones, as blocked or unblocked compounds.

Examples of diisocyanates and polyisocyanates are isophorone diisocyanate (IPDI), hexamethylene diisocyanate (HDI), toluylene diisocyanate, diphenylmethane diisocyanate, trimethylhexane diisocyanate, cyclohexane diisocyanate, cyclohexanedimethylene diisocyanate, tetramethylenexylylene diisocyanate, dicyclohexylmethane diisocyanate or the trimerization products, for example, aliphatic diisocyanate-based isocyanurates or mixtures thereof. Aromatic diisocyanate compounds may also be present, such as, for example, tolylene diisocyanate (TDI), diphenylalkyl diisocyanates or mixtures thereof. Examples of urethdiones are Vestagon® BF1320 (Degussa), Crelan® EN403 (Bayer).

The diisocyanates, polyisocyanates and urethdiones can be used also in blocked form. Blocking may proceed with conventional agents, e.g., with monoalcohols, glycol ethers, ketoximes, lactams, malonic acid esters, acetoacetic acid esters, for example, ethylene glycol monobutyl ether, butanone oxime, phenol, ethyl acetoacetate, dimethylpyrazole or caprolactam.

Preferred is the use of at least one urethdione.

The content of the hardeners (B) may be preferably in a range, for example, between 15 and 40 wt%, the wt% being based on the total weight of the powder coating composition.

The powder coating composition according to the invention may contain as further components (C) the constituents conventional in powder coating technology, such as, additives, pigments and/or fillers as known by a person skilled in the art.

Additives are, for example, degassing auxiliaries, flow-control agents, flatting agents, texturing agents, fillers (extenders), catalysts, dyes, antioxidant, anti-UV, tribostatic or corona electrostatic charging auxiliaries. Compounds having anti-microbial activity may also be added to the powder coating compositions.

The crosslinking reaction may be additionally accelerated by the presence in the powder coating composition according to the invention of catalysts known from thermal crosslinking. Such catalysts are, for example, tin salts, phosphides, amines, ammonium salts, cyclic amidines, phosphonium salts, alkyl- or aryl- imidazolines and amides. They may be used, for example, in quantities of 0,01 to 3 wt%, based on the total weight of the powder coating composition.

The powder coating composition of this invention may contain transparent, color-imparting and/or special effect-imparting pigments and/or fillers (extenders). Suitable color-imparting pigments are any conventional coating pigments of an organic or inorganic nature considering their heat stability which must be sufficient to support the curing of the powder coating composition of the invention. Examples of inorganic or organic color-imparting pigments are titanium dioxide, micronized titanium dioxide, carbon black, iron oxide, azopigments, and phthalocyanine pigments. Examples of special effect-imparting pigments are metal pigments, for example, made from aluminum, copper or other metals, interference pigments, such as, metal oxide coated metal pigments and coated mica. Examples of usable extenders are silicon dioxide, aluminum silicate, barium sulfate, calcium carbonate, magnesium carbonate, micronized dolomite.

The constituents are used in conventional amounts known to the person skilled in the art, for example, based on the total weight of the powder coating composition, regarding pigments and/or fillers in quantities of 0 to 40 wt.%, preferred 0 to 30 wt%, regarding the additives in quantities of 0,01 to 10%, preferred 1 to 5 wt%.

The powder coating composition according to the invention may be prepared by conventional manufacturing techniques used in the powder coating industry, such as, extrusion and/or grinding processes.

For example, the ingredients used in the powder coating composition, can be blended together and the mixture is extruded. In the extruder the mixture is melted and homogenized, a dispersion of pigments is ensured by shearing effect. The extruded material is then cooled on chill roles, broken up and then ground to a fine powder, which can be classified to the desired grain size, for example, to an average particle size of 20 to 200 µm, preferred 20 to 50 µm.

The powder coating composition may also be prepared by spraying from supercritical solutions, NAD "non-aqueous dispersion" processes or ultrasonic standing wave atomization process.

Furthermore, specific components of the composition according to the invention, for example, additives, pigment, fillers, may be processed with the finished powder coating particles after extrusion and grinding by a "bonding" process using an impact fusion. For this purpose, the specific components may be mixed with the powder coating particles. During blending, the individual powder coating particles are treated to softening their surface so that the components adhere to them and are homogeneously bonded with the surface of the powder coating particles. The softening of the powder particles' surface may be done by heat treating the particles to a temperature, e.g. the glass transition temperature Tg of the composition, in a range, of e.g., 50 to 60°C. After cooling the mixture the desired particle size of the resulted particles may be proceed by a sieving process.

The powder coating composition of this invention may be applied by, e.g., electrostatic spraying, thermal or flame spraying, or fluidized bed coating methods, all of which are known to those skilled in the art.

The coating compositions may be applied to, e.g., metallic substrates, non-metallic substrates, such as, paper, wood, plastics, glass and ceramics, including heat-sensitive substrates, as a one-coating system or as coating layer in a multi-layer film build. In certain applications, the substrate to be coated may be pre-heated before the application of the powder composition, and then either heated after the application of the powder or not. For example, gas is commonly used for various heating steps, but other methods, e.g., microwaves, conduction methods, Infrared (IR) radiation, near infrared (NIR) radiation, electrical induction heating are also known. Catalytic gas infrared ovens and electric infrared oven are commonly used, frequently coupled with gas convection ovens.

The powder coating compositions according to the invention can be applied directly on the substrate surface or on a layer of a primer which can be a liquid or a powder based primer, for example, a conductive primer in case of coating of non-conductive substrates like wood or MDF. The powder coating compositions according to the invention can also be applied as a coating layer of a multilayer coating system based on liquid or powder coats, for example, based on a powder or liquid clear coat layer applied onto a color-imparting and/or special effect-imparting base coat layer or a pigmented one-layer powder or liquid top coat applied onto a prior coating.

In particular, the powder coating of the invention can be used for applications in the architecture powder coating market.

The applied and melted powder coating layer can be cured by thermal energy. The coating layer may, for example, be exposed by convective, gas and/or radiant heating, e.g., infra red (IR) and/or near infra red (NIR) irradiation, as known in the art, to temperatures of, e.g., 100°C to 300°C, preferably of 180°C to 280°C (object temperature in each case).

If the composition according to the invention is used together with unsaturated resins and, optionally photo-initiators or with unsaturated resin containing powders, dual curing may also be used. Dual curing means a curing method of the powder coating composition according to the invention where the applied composition can be cured, e.g., both by high energy radiation such as, e.g. ultra violet (UV) irradiation, and by thermal curing methods known by a skilled person.

The powder coating composition according to the invention is especially suitable as a coating for a sublimatic transfer of decorations on the substrate coated with the powder coating composition of the invention. Sublimatic transfer processes are well-known to a person skilled in the art, in general.

The present invention is further defined in the following Examples. It should be understood that these Examples are given by way of illustration only. From the above discussion and these Examples, one skilled in the art can ascertain the essential characteristics of this invention, and without departing from the spirit and scope thereof, can make various changes and modifications of the invention to adapt it to various uses and conditions. As a result, the present invention is not limited by the illustrative examples set forth herein below, but rather is defined by the claims contained herein below.

The following Examples illustrate the invention.

### Examples

### Example 1

### Manufacture of a Powder Coating Composition according to the Invention and Application

A powder coating composition according to the invention is prepared using the following ingredients:

| Formulation 1 | Weight% |
|---|---|
| Polyester A (hydroxyl number 48, Mn 4300) | 44 |
| Polyester B (hydroxyl number 290, Mn 2500) | 15 |
| Crelan® EN403 (Bayer) | 34 |
| Benzoine | 0.3 |
| Flow agent | 1 |
| Additives | 2 |
| Pigment | 3.7 |

The ingredients of each composition are mixed and extruded in an extruder at 120°C. The melt-mixed formulation is then cooled, broken down, and the resulted material is grinded to a D50 value of 35-40µm particle size distribution.

The final powder composition is applied to a metal sheet by corona technique and cured by a convention oven, 15 minutes at 200°C. The resulted dry film thickness is of 70-80 µm.

## Claims

1. An anti-graffiti powder coating composition comprising
(A) 30 to 80 wt% of a mixture of at least one polyester resin A having a hydroxyl number in the range of 30 to 60 mg KOH/g, a weight average molar mass Mn in a range of 3100 to 5000 and a glass transition temperature Tg of 40 to 60 °C and at least one polyester resin B having a hydroxyl number in the range of 250 to 350 mg KOH/g, a weight average molar mass Mn in a range of 2000 to 3000,
(B) 10 to 40 wt% of at least one hardeners selected from the group consisting of diisocyanates, polyisocyanates and urethdiones, and
(C) 0,01 to 40 wt% of at least one coating additive, pigment and/or filler,
the wt% being based on the total weight of the powder coating composition.

2. The composition according to claim 1 wherein the mixture of polyester A and polyester B is in the range of 40 to 65 wt%.

3. The composition according to claim 1 and 2 wherein the mixing ratio of polyester A to polyester B is in the range of 70:30 to 80:20.

4. The composition according to claim 1 to 3 wherein the mixing ratio of polyester A to polyester B is in the range of 75:25.

5. The composition according to claim 1 to 4 wherein polyurethanes and urethdiones are used as component (B).

6. A coating process comprising the steps (a) applying the composition according to claim 1 to 5 onto a substrate, and (b) curing the applied composition.

7. A substrate coated with the composition according to claim 1 to 5.
